# EUROPEAN PATENT APPLICATION

(11) **EP 4 506 885 A1**
(43) Date of publication of application: **12.02.2025**
(21) Application number: 22936499.7
(22) Date of filing: 06.04.2022
(51) Int. Cl.: G06T 7/00, G06T 7/73

(54) **INFORMATION PROCESSING DEVICE, INFORMATION PROCESSING METHOD, AND PROGRAM**

(71) Applicant: Sony Interactive Entertainment Inc., Tokyo 108-0075 (JP)
(72) Inventor: SATO, Shogo, Tokyo 108-0075 (JP); INADA, Tetsugo, Tokyo 108-0075 (JP); SEGAWA, Hiroyuki, Tokyo 108-0075 (JP)
(74) Representative: Müller Hoffmann & Partner
(86) International application number: PCT/JP2022/017177
(87) International publication number: WO 2023/195099

(57) **Abstract**

The accuracy of pose recognition using keypoints is improved. An information processing system determines a plurality of keypoints for recognizing a pose of an object on the basis of a three-dimensional model of the object, determines one or a plurality of candidate keypoints for at least some of the plurality of keypoints, determines reliability of each of the keypoints and the candidate keypoints from information that is output when a captured image is input to a machine learning model and that indicates positions of the keypoints and the candidate keypoints, the machine learning model being configured to receive the captured image as an input and output information indicating the positions of the keypoints included in the set and information indicating the positions of the candidate keypoints, and replaces the at least some of the keypoints included in the set with at least some of the candidate keypoints on the basis of the reliability determined.

## Description

### [Technical Field]

The present invention relates to an information processing apparatus, an information processing method, and a program.

### [Background Art]

There is a technique that estimates positions of keypoints of an object from a captured image to estimate a pose of the object from the estimated keypoints. In this technique, three-dimensional positions of the keypoints in a 3D model of the object are determined in advance, and the pose is estimated by performing predetermined processing using the three-dimensional positions and the estimated positions of the keypoints in the image. As a technique for determining keypoints in a three-dimensional model of an object, for example, the Farthest Point method is known.

Sida Peng et al. has presented a paper "PVNet: Pixel-Wise Voting Network for 6DoF Pose Estimation" at the 2019 IEEE/CVF Conference on Computer Vision and Pattern Recognition (CVPR). This paper discloses that a machine learning model is trained with training data that includes input images generated from a 3D model and ground truth output images, and that, on the basis of an output when a captured image is input to that trained machine learning model, positions on the image of keypoints used for pose estimation are calculated.

### [Summary]

### [Technical Problem]

In a case where keypoints are determined from a 3D model by known methods such as the Farthest Point method, there have been cases where it is difficult to recognize the positions of keypoints from an image in which an object is captured, by using a trained machine learning model. For example, in a case where an end portion of a 3D model with an error from an actual object is selected as a keypoint, or in a case where the bottom of a recessed portion is selected as a keypoint, it is difficult to accurately recognize the end portion from a captured image. In such cases, there are risks of a decrease in accuracy of keypoint estimation, and a decrease in accuracy of pose estimation.

The present invention has been made in view of the above-mentioned circumstances, and it is an object thereof to provide a technology to improve the accuracy of pose recognition using keypoints.

### [Solution to Problem]

In order to solve the above-mentioned problem, an information processing apparatus according to the present invention includes set determination means for determining a set including a plurality of keypoints for recognizing a pose of an object, on the basis of a three-dimensional model of the object, candidate determination means for determining one or a plurality of candidate keypoints that are candidates to replace at least some of the plurality of keypoints included in the set, reliability determination means for determining reliability of each of the keypoints included in the set and the candidate keypoints from information that is output when a captured image is input to a machine learning model trained and that indicates positions of the keypoints included in the set and the candidate keypoints, the machine learning model being configured to receive the captured image as an input and output information indicating the positions of the keypoints included in the set and information indicating the positions of the candidate keypoints, and replacement means for replacing the at least some of the keypoints included in the set with at least some of the candidate keypoints on the basis of the reliability determined.

In one aspect of the present invention, the machine learning model to which the captured image has been input may output a plurality of images each indicating the positions of the keypoints included in the set and the candidate keypoints.

In one aspect of the present invention, in each of the plurality of images output by the machine learning model to which the captured image has been input, each point may indicate a positional relation with any of the keypoints included in the set and the candidate keypoints, and the reliability determination means may determine, regarding any of the plurality of images output, on the basis of a variation of a plurality of position candidates that are candidates for a position of any of a plurality of keypoints and candidate keypoints corresponding to the any of the images and that are obtained from different points included in the any of the images, reliability of the any of the plurality of keypoints and the candidate keypoints.

In one aspect of the present invention, the information processing apparatus may further include pose determination means for determining the pose of the object from information that has been output when the captured image is input to the machine learning model and that indicates positions of some of the keypoints included in the set and any of the candidate keypoints, in which the reliability determination means may determine the reliability of the keypoints and the candidate keypoints on the basis of positions of the keypoints and the candidate keypoints re-projected according to the pose determined and the positions of the keypoints and the candidate keypoints indicated by the information output.

In one aspect of the present invention, the information processing apparatus may further include pose determination means for determining the pose of the object from information that has been output when the captured image is input to the machine learning model and that indicates positions of some of the keypoints included in the set and any of the candidate keypoints, in which the reliability determination means may determine estimated reliability of each of the keypoints included in the set and the candidate keypoints on the basis of the pose determined and ground truth data on the pose of the object in the captured image.

Further, an information processing method according to the present invention includes a step of determining a set including a plurality of keypoints for recognizing a pose of an object, on the basis of a three-dimensional model of the object, a step of determining one or a plurality of candidate keypoints that are candidates to replace at least some of the plurality of keypoints included in the set, a step of determining reliability of each of the keypoints included in the set and the candidate keypoints from information that is output when a captured image is input to a machine learning model trained and that indicates positions of the keypoints included in the set and the candidate keypoints, the machine learning model being configured to receive the captured image as an input and output information indicating the positions of the keypoints included in the set and information indicating the positions of the candidate keypoints, and a step of replacing the at least some of the keypoints included in the set with at least some of the candidate keypoints on the basis of the reliability determined.

Further, a program according to the present invention causes a computer to execute processing of determining a set including a plurality of keypoints for recognizing a pose of an object, on the basis of a three-dimensional model of the object, determining one or a plurality of candidate keypoints that are candidates to replace at least some of the plurality of keypoints included in the set, determining reliability of each of the keypoints included in the set and the candidate keypoints from information that is output when a captured image is input to a machine learning model trained and that indicates positions of the keypoints included in the set and the candidate keypoints, the machine learning model being configured to receive the captured image as an input and output information indicating the positions of the keypoints included in the set and information indicating the positions of the candidate keypoints, and replacing the at least some of the keypoints included in the set with at least some of the candidate keypoints on the basis of the reliability determined.

According to the present invention, the accuracy of pose recognition using keypoints can be improved.

### [Brief Description of Drawings]

[FIG. 1]

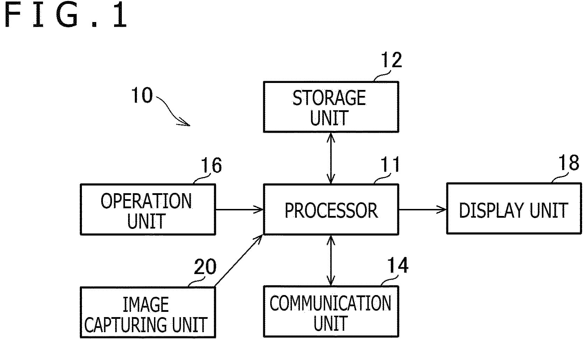

   FIG. 1 is a diagram illustrating an example of a configuration of an information processing system according to one embodiment of the present invention.
[FIG. 2]

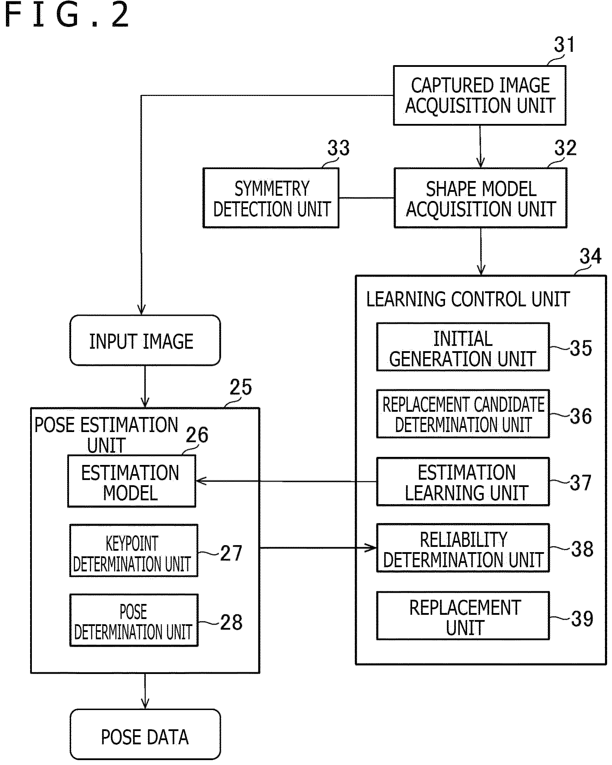

   FIG. 2 is a functional block diagram illustrating examples of functions implemented in the information processing system according to the embodiment of the present invention.
[FIG. 3]

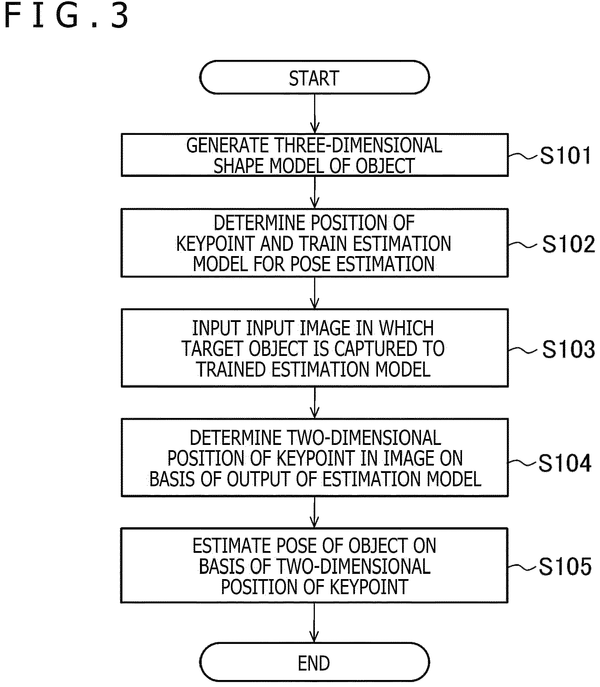

   FIG. 3 is a flow diagram schematically illustrating processing of the information processing system.
[FIG. 4]

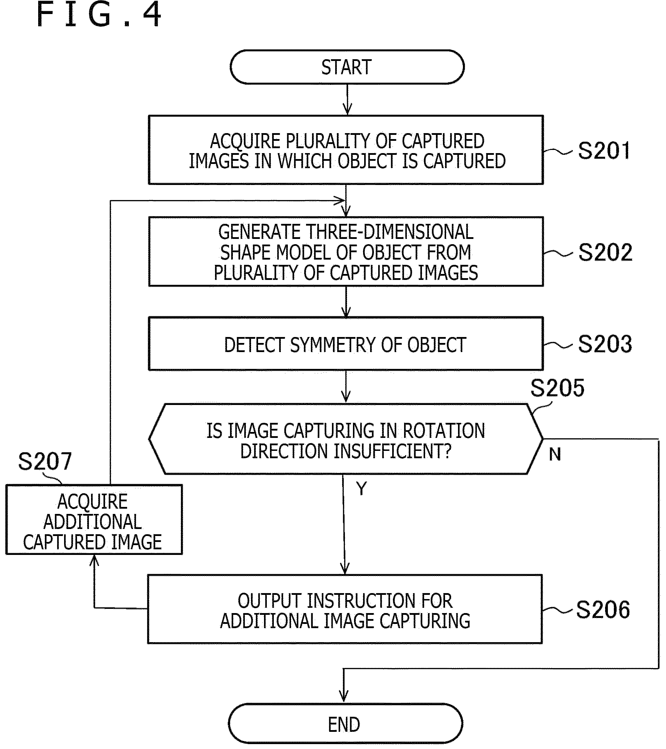

   FIG. 4 is a flow diagram illustrating an example of processing of capturing images of an object and generating a three-dimensional model.
[FIG. 5]

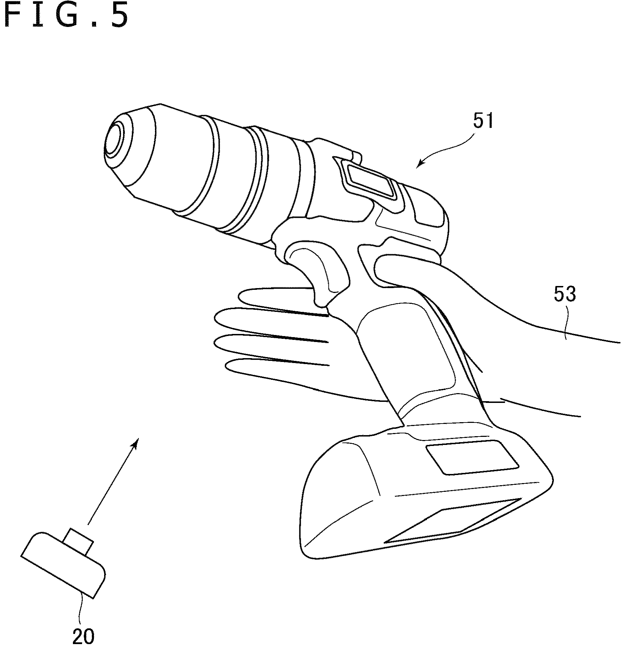

   FIG. 5 is a diagram illustrating how images of the object are captured.
[FIG. 6]

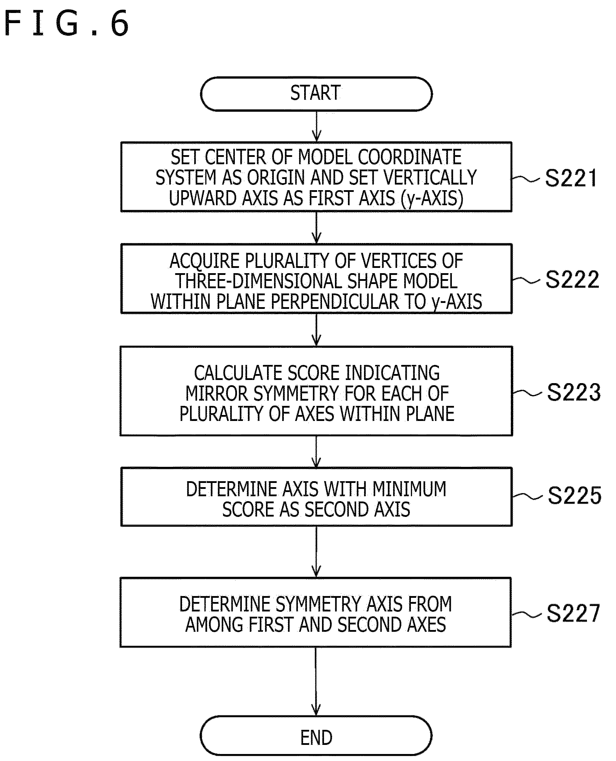

   FIG. 6 is a flow diagram illustrating an example of processing of detecting an axis of rotation.
[FIG. 7]

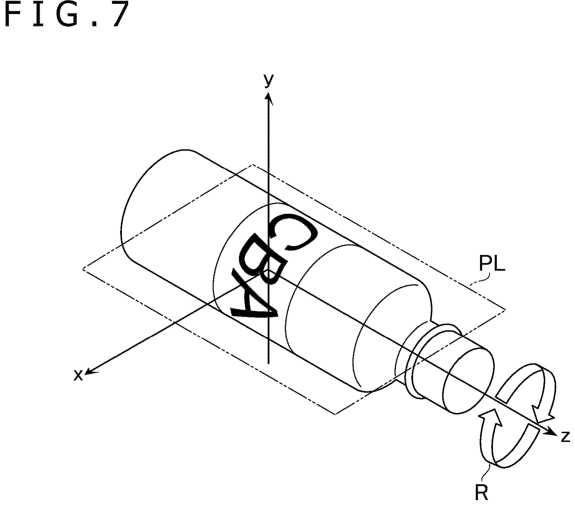

   FIG. 7 is a diagram illustrating examples of the axis of rotation and an instruction for additional image capturing.
[FIG. 8]

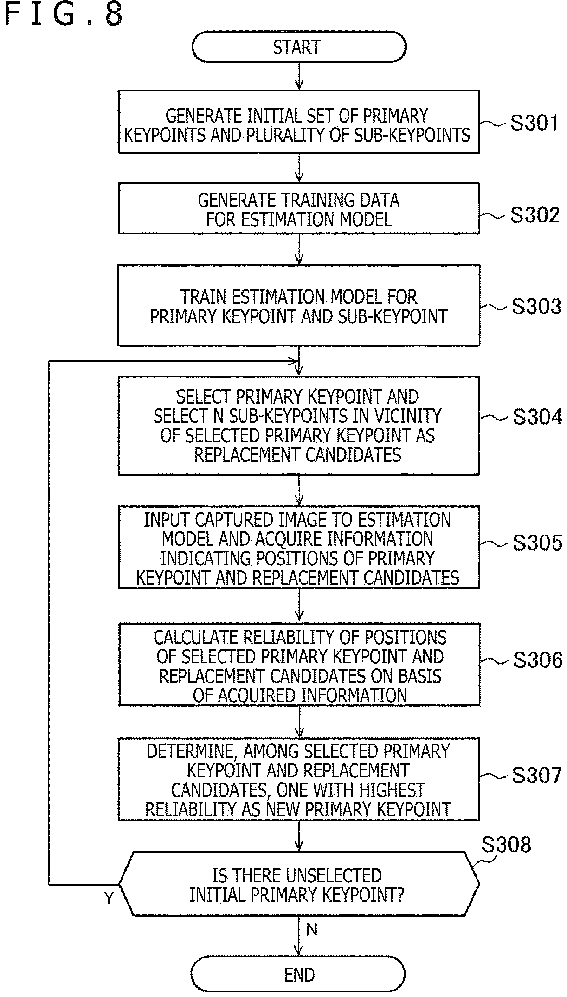

   FIG. 8 is a flow diagram illustrating an example of processing of determining keypoints and training an estimation model.
[FIG. 9]

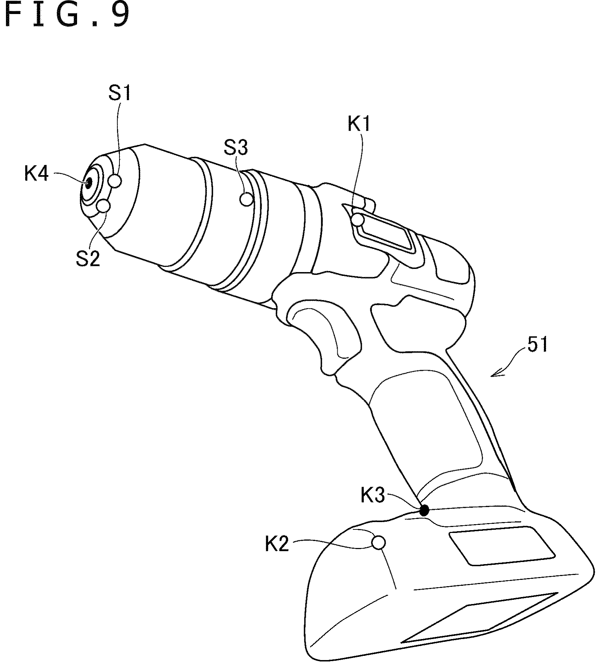

   FIG. 9 is a diagram illustrating primary keypoints and sub-keypoints generated from the object.
[FIG. 10]

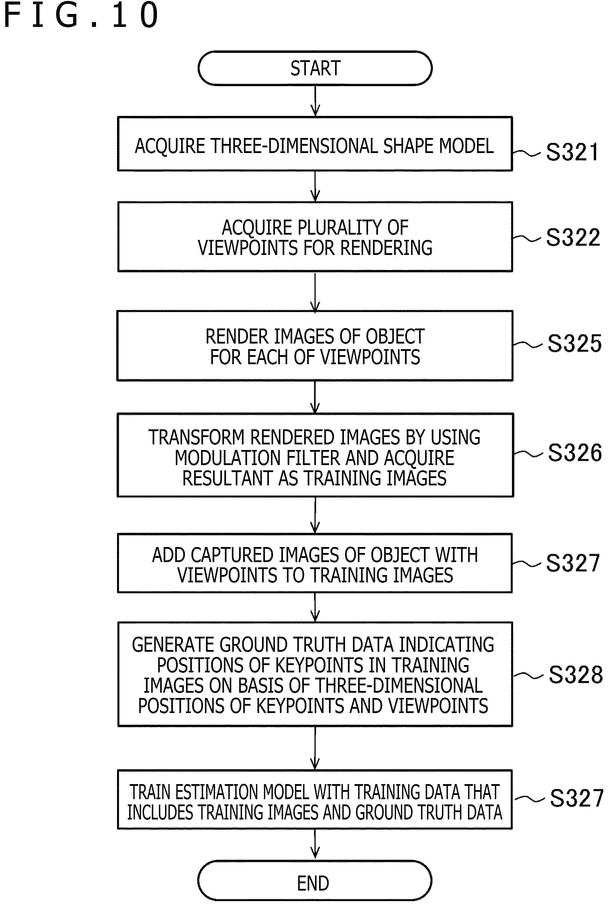

   FIG. 10 is a flow diagram illustrating an example of processing of generating training data and training the estimation model.
[FIG. 11]

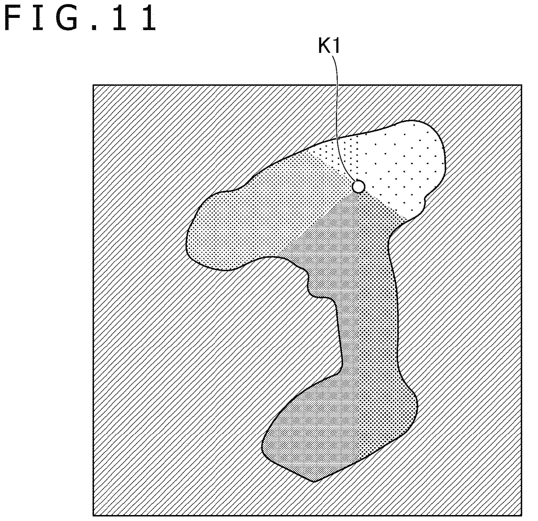

   FIG. 11 is a diagram illustrating an example of ground truth data.

### [Description of Embodiment]

Now, one embodiment of the present invention is described in detail on the basis of the drawings. In the present embodiment, a description is given on a case where the invention is applied to an information processing system configured to receive as an input an image in which an object is captured and estimate a pose of the object.

This information processing system includes a machine learning model configured to output information indicating a pose of an object estimated from an image in which the object is captured. Further, the information processing system is configured to complete training of the machine learning model in a short period of time. The required period of time is assumed to be, for example, a few tens of seconds to grasp and rotate the object, and approximately a few minutes for machine learning.

FIG. 1 is a diagram illustrating an example of a configuration of the information processing system according to the embodiment of the present invention. The information processing system according to the present embodiment includes an information processing apparatus 10. The information processing apparatus 10 is, for example, a computer such as a game console or a personal computer. As illustrated in FIG. 1, the information processing apparatus 10 includes, for example, a processor 11, a storage unit 12, a communication unit 14, an operation unit 16, a display unit 18, and an image capturing unit 20. The information processing system may include the single information processing apparatus 10 or may include a plurality of apparatuses including the information processing apparatus 10.

The processor 11 is a program-controlled device, such as a CPU, configured to operate in accordance with programs installed in the information processing apparatus 10, for example.

The storage unit 12 includes at least some of storage elements such as a ROM and a RAM and external storage devices such as a solid-state drive. The storage unit 12 stores programs and the like that are executed by the processor 11.

The communication unit 14 is a communication interface for wired communication or wireless communication, such as a network interface card, for example, and exchanges data with other computers and terminals via a computer network such as the Internet.

The operation unit 16 is, for example, an input device, such as a keyboard, a mouse, a touch panel, or a game console controller, and receives user's operation input and outputs signals indicating the contents thereof to the processor 11.

The display unit 18 is a display device such as a liquid crystal display and displays various images in accordance with instructions from the processor 11. The display unit 18 may be a device configured to output video signals to external display devices.

The image capturing unit 20 is an image capturing device such as a digital camera. The image capturing unit 20 according to the present embodiment is a camera capable of capturing moving images, for example. The image capturing unit 20 may be a camera capable of acquiring visible RGB images. The image capturing unit 20 may be a camera capable of acquiring visible RGB images and depth information synchronized with the RGB images. The image capturing unit 20 may be external to the information processing apparatus 10, and in this case, the information processing apparatus 10 may be connected to the image capturing unit 20 via the communication unit 14 or an input/output unit described below.

Note that, the information processing apparatus 10 may include an audio input/output device such as a microphone or a speaker. Further, the information processing apparatus 10 may include, for example, a communication interface such as a network board, an optical disc drive configured to read optical discs such as DVD-ROM and Blu-ray (registered trademark) discs, or the input/output unit (USB (Universal Serial Bus) port) for data input/output from/to external equipment.

FIG. 2 is a functional block diagram illustrating examples of functions implemented in the information processing system according to the embodiment of the present invention. As illustrated in FIG. 2, the information processing system functionally includes a pose estimation unit 25, a captured image acquisition unit 31, a shape model acquisition unit 32, a symmetry detection unit 33, and a learning control unit 34. The pose estimation unit 25 functionally includes an estimation model 26, a keypoint determination unit 27, and a pose determination unit 28. The learning control unit 34 functionally includes an initial generation unit 35, a replacement candidate determination unit 36, an estimation learning unit 37, a reliability determination unit 38, and a replacement unit 39. The estimation model 26 is a type of machine learning model.

These functions are implemented mainly by the processor 11 and the storage unit 12. More specifically, these functions may be implemented by the processor 11 executing a program that is installed in the information processing apparatus 10 as a computer and that includes execution commands corresponding to the functions described above. Further, for example, this program may be supplied to the information processing apparatus 10 via a computer-readable information storage medium such as an optical disc, a magnetic disk, or a flash memory, or via the Internet or the like.

Note that, in the information processing system according to the present embodiment, all the functions illustrated in FIG. 2 may not necessarily be implemented, and functions other than the functions illustrated in FIG. 2 may be implemented.

The pose estimation unit 25 estimates a pose of a target object 51 on the basis of information output when an input image is input to the estimation model 26. The input image is an image of the object captured by the image capturing unit 20 and is acquired by the captured image acquisition unit 31. The estimation model 26 is a machine learning model and is trained with training data. When receiving input data as an input, the trained estimation model 26 outputs data as an estimation result.

The trained estimation model 26 receives as an input information regarding an image in which the target object is captured, and the estimation model 26 outputs information indicating positions of keypoints for pose estimation of the object. The estimation model 26 receives the captured image as an input and outputs an image indicating positions of primary keypoints included in a set and an image indicating positions of sub-keypoints. The primary keypoints and the sub-keypoints are described later.

The training data for the estimation model 26 includes a plurality of learning images rendered by a three-dimensional shape model of the target object and ground truth data indicating the positions of the keypoints of the object in the learning images. The keypoints are virtual points within the object that are used for pose calculation. The data indicating the positions of the keypoints may be a position image in which each point indicates a positional relation (for example, relative direction) between that point and a keypoint or may be a position image that is a heat map in which each point indicates the probability of existence of a keypoint. The details of the training of the estimation model 26 are described later.

The input image may be an image obtained by processing an image of the object captured by the image capturing unit 20. For example, the input image may be an image in which regions other than the target object are masked or an image in which the size of the object in the image is enlarged or reduced to a predetermined size.

The keypoint determination unit 27 determines, on the basis of the output of the estimation model 26, two-dimensional positions of keypoints in the input image. More specifically, for example, the keypoint determination unit 27 determines candidates for the two-dimensional positions of the keypoints in the input image on the basis of the position image output from the estimation model 26. For example, the keypoint determination unit 27 calculates candidate points for a keypoint from each combination of any two points in the position image and generates scores indicating whether the directions indicated by each point in the position image match the plurality of candidate points. The keypoint determination unit 27 may estimate the candidate point with the highest score as the position of the keypoint. Further, the keypoint determination unit 27 repeats the processing described above for each keypoint.

The pose determination unit 28 estimates a pose of the target object 51 on the basis of information indicating the two-dimensional positions of the keypoints in the input image and information indicating the three-dimensional positions of the keypoints in the three-dimensional shape model of the target object 51 and outputs pose data indicating the estimated pose. The pose of the target object 51 is estimated by a well-known algorithm. For example, the pose may be estimated by solving a Perspective-n-Point (PnP) problem for pose estimation (for example, EPnP). Further, the pose determination unit 28 may estimate not only the pose of the target object 51 but also a position of the target object 51 in the input image, and the pose data may include information indicating the position.

The details of the estimation model 26, the keypoint determination unit 27, and the pose determination unit 28 may be as described in the paper "PVNet: Pixel-Wise Voting Network for 6DoF Pose Estimation."

The captured image acquisition unit 31 acquires a captured image in which the target object is captured by the image capturing unit 20. The image capturing unit 20 is assumed to have camera internal parameters acquired by calibration in advance. These parameters are used in solving a PnP problem.

The shape model acquisition unit 32 generates and acquires a three-dimensional model of the object from a plurality of captured images of the object acquired by the captured image acquisition unit 31. More specifically, the shape model acquisition unit 32 extracts a plurality of feature vectors indicating local features for each of the plurality of captured images and obtains, from the plurality of corresponding feature vectors extracted from the plurality of captured images and positions at which the feature vectors have been extracted in the captured images, three-dimensional positions of the points at which the feature vectors have been extracted. Then, the shape model acquisition unit 32 acquires the three-dimensional shape model of the target object 51 on the basis of the three-dimensional positions. Since this method is a well-known method also used for software for implementing what is generally called SfM and Visual SLAM, the detailed description thereof is omitted.

The symmetry detection unit 33 detects symmetry of the object from the three-dimensional model. More specifically, the symmetry detection unit 33 detects mirror symmetry or rotational symmetry of the object from the three-dimensional model.

The learning control unit 34 determines keypoints of the target object and trains the estimation model 26 on the basis of the three-dimensional model.

The initial generation unit 35 generates an initial set of a plurality of primary keypoints on the basis of the three-dimensional model. The initial generation unit 35 may generate a set of a plurality of keypoints (primary keypoints) by, for example, the Farthest Point algorithm, which is well-known. Further, the initial generation unit 35 generates a plurality of alternative keypoints (sub-keypoints) that can be candidates to replace the keypoints, on the basis of the three-dimensional model. The initial generation unit 35 may generate a plurality of sub-keypoints by, for example, the Farthest Point algorithm, which is well-known. In the present embodiment, the number N of primary keypoints is 8, but it is sufficient if the number N is an integer of 4 or more. The number M of sub-keypoints ranges from 20 to 50, but it is sufficient if the number M of sub-keypoints is an integer greater than the number N of primary keypoints.

The replacement candidate determination unit 36 determines one or a plurality of sub-keypoints (replacement candidates) that are candidates to replace at least some of a plurality of primary keypoints included in a set (target keypoints). The replacement candidate determination unit 36 may determine N sub-keypoints (where N is an integer of 1 or more but less than M) in the vicinity of a target keypoint from among the plurality of sub-keypoints as replacement candidates. The plurality of sub-keypoints in the vicinity of the target keypoint may be ones that are 1st to Nth closest to the target keypoint. Further, the number of target keypoints may be 1 or more but equal to or less than the number of primary keypoints. In the following, an example in which the number of target keypoints is 1 in single processing is described.

The estimation learning unit 37 generates training data used for training the estimation model 26 and trains the estimation model 26 with the training data. The training data includes a plurality of learning images rendered by the three-dimensional shape model of the target object and ground truth data indicating positions of the keypoints of the object in the learning images. The keypoints for which ground truth data is generated by the estimation learning unit 37 include at least a set of primary keypoints and sub-keypoints that serve as replacement candidates. The estimation learning unit 37 may generate ground truth data for the plurality of primary keypoints included in the initial set and all the sub-keypoints.

More specifically, the estimation learning unit 37 may determine the positions of the primary keypoints and sub-keypoints in the learning images on the basis of the pose of the rendered object and generate ground truth position images corresponding to those positions for each of the primary keypoints and sub-keypoints. Note that, the training data may include learning images in which the object is captured and position images generated from the pose of the object in the learning images estimated by what is generally called SfM or Visual SLAM.

The reliability determination unit 38 determines, from the information that is output when a captured image is input to the trained estimation model and that indicates the positions of the primary keypoints and the sub-keypoints that serve as replacement candidates, reliability of each of the primary keypoints and the sub-keypoints that serve as replacement candidates.

The replacement unit 39 replaces a target keypoint with at least some of the sub-keypoints that serve as replacement candidates, on the basis of the reliability. Note that, the replacement unit 39 may not make replacement in a case where the reliability of the target keypoint is higher than that of the sub-keypoints. Note that, the set of primary keypoints is used for pose estimation based on the output of the estimation model 26, after the replacement by the replacement unit 39. In a case where there are a plurality of target keypoints, the replacement unit 39 replaces each of the target keypoints with a corresponding one of the sub-keypoints that serve as replacement candidates on the basis of the reliability.

In the following, the processing of the information processing system is described. FIG. 3 is a flow diagram schematically illustrating the processing of the information processing system.

First, the information processing system generates, on the basis of an image in which a target object is captured, a three-dimensional shape model of the object (S101). Then, the learning control unit 34 included in the information processing system determines three-dimensional positions of keypoints on the basis of the three-dimensional shape model, and trains the estimation model 26 for pose estimation (S102). Here, "keypoints" refer to primary keypoints, and the same holds true for S103 to S105.

When the estimation model 26 is trained, the pose estimation unit 25 inputs the input image in which the object is captured, to the trained estimation model 26 (S103) and acquires data output by the estimation model 26. Then, on the basis of the output of the estimation model 26, the pose estimation unit 25 determines two-dimensional positions of the keypoints in the image (S104).

More specifically, in a case where the output of the estimation model 26 is a position image in which each point indicates a relative direction to a keypoint, the keypoint determination unit 27 included in the pose estimation unit 25 calculates candidates for the position of the keypoint from each point in the position image and determines the position of the keypoint on the basis of those candidates. In a case where the output of the estimation model 26 is a position image of a heat map, the keypoint determination unit 27 may determine the position of the point with the highest probability as the position of the keypoint by a well-known method.

The pose estimation unit 25 estimates a pose of the object on the basis of the determined two-dimensional positions of the keypoints and the three-dimensional positions of those keypoints in the three-dimensional shape model (S105). Although FIG. 3 illustrates that the processing from S103 to S105 is performed once, in reality, the processing from S103 to S105 may be repeatedly executed until there is an instruction from the user.

FIG. 4 is a flow diagram illustrating an example of the processing of capturing images of the target object and generating the three-dimensional model, and is a diagram illustrating the processing of S101 in more detail.

First, the captured image acquisition unit 31 acquires a plurality of captured images in which a target object is captured (S201).

FIG. 5 is a diagram illustrating how images of the target object are captured. The target object 51 illustrated in FIG. 5 is held by, for example, a hand 53 and captured by the image capturing unit 20. In the present embodiment, it is desirable to capture the target object 51 from various directions. Hence, the image capturing unit 20 changes the capturing direction of the target object 51 while capturing images periodically like moving image capturing. For example, the pose of the target object 51 may be changed with the hand 53 to change the capturing direction of the target object 51. Alternatively, the target object 51 may be placed on an AR marker, and the image capturing unit 20 may be moved to change the capturing direction. An acquisition interval of captured images used in the processing described below may be wider than a capturing interval of moving images. The captured image acquisition unit 31 may mask a silhouette image of the hand 53 from those captured images by a well-known method (for example, skin color detection).

Next, the shape model acquisition unit 32 generates a three-dimensional shape model of the object from the plurality of captured images thus acquired (S202). The details of the method of generating the three-dimensional shape model may be the same as the one described above.

When the three-dimensional shape model is generated, the symmetry detection unit 33 detects the symmetry of the object (S203). Here, the symmetry detection unit 33 may detect, as the symmetry of the object, whether the object is rotationally symmetric or not and an axis of rotation, or may detect whether the object is mirror symmetric or not and a plane of symmetry.

The detection of the symmetry of the object is further described. FIG. 6 is a flow diagram illustrating an example of the processing of detecting the axis of rotation.

First, the symmetry detection unit 33 sets a vertically upward axis having a center of a model coordinate system of the object as an origin, as a first axis (y-axis) (S221). Next, the symmetry detection unit 33 acquires a plurality of vertices of the three-dimensional shape model within a plane PL perpendicular to the y-axis (S222).

FIG. 7 is a diagram illustrating an example of a relation between an object and axes. The plane PL is, for example, an xz plane passing through the origin. A rotation direction indication R is described later.

The symmetry detection unit 33 sets a plurality of different axes passing through the origin within the plane PL and generates scores indicating mirror symmetry for each of the plurality of axes (S223). The scores are each the sum of distances between the points rotated 180 degrees about that axis and the vertices closest to those points of the three-dimensional shape model.

When the scores are calculated, the symmetry detection unit 33 determines the axis with the minimum score as a second axis (for example, x-axis) on the basis of the scores calculated for each of the plurality of axes (S225). Note that, when the first and second axes are determined, a third axis is necessarily obtained. The first axis and the second axis may possibly be the axes of rotational symmetry.

The symmetry detection unit 33 determines the axis of rotational symmetry from among the first axis and the second axis as the symmetry of the object (S227). The symmetry detection unit 33 may finely divide the coordinates along the axis and determine, as the axis of symmetry, the axis with the smallest variation of distances between each of the vertices within the divided range and the origin of the axis. Note that, the axis of symmetry detected by the symmetry detection unit 33 is merely a candidate for the axis of rotational symmetry and does not necessarily provide rotational symmetry in a rigorous sense.

Note that, the symmetry detection unit 33 may determine the plane of mirror symmetry instead of the axis of rotational symmetry. Further, the symmetry detection unit 33 may allow the user to input the axis of symmetry.

When the symmetry of the object is detected in S203, the shape model acquisition unit 32 determines whether the image capturing in the rotation direction is insufficient (S205). In determining a capturing direction, the capturing direction may be determined on the basis of whether the component in a rotation direction along the target axis of a difference between the capturing direction of an image determined in creating the three-dimensional model and the capturing direction of an adjacent image is within a threshold or not. In a case where it is determined that the image capturing in the rotation direction is not insufficient (N in S205), the processing of FIG. 4 ends.

On the other hand, in a case where it is determined that the image capturing in the rotation direction is insufficient (Y in S205), the shape model acquisition unit 32 outputs an instruction for additional image capturing (S206). The instruction for additional image capturing may be performed by displaying an image including the rendered image of the object and the rotation direction indication R. Further, the captured image acquisition unit 31 acquires an additional captured image and repeats the processing of S202 and thereafter.

Through the processing illustrated in FIG. 4, the three-dimensional shape model of the object is acquired. Further, through the processing from S203 to S207, it is possible to acquire a three-dimensional shape model with certain accuracy also for objects with symmetry.

FIG. 8 is a flow diagram illustrating an example of the processing of determining the primary keypoints and the sub-keypoints and training the estimation model 26. FIG. 8 is a diagram illustrating the processing of S102 in FIG. 3 in more detail.

First, the initial generation unit 35 generates an initial set of primary keypoints and a plurality of alternative keypoints (sub-keypoints) (S301). More specifically, the initial generation unit 35 may generate three-dimensional positions of the initial keypoints and the plurality of alternative keypoints from the three-dimensional shape model of the object (more specifically, information regarding the vertices included in the three-dimensional shape model) by, for example, the Farthest Point algorithm, which is well-known.

FIG. 9 is a diagram illustrating the primary keypoints and the sub-keypoints generated from the object. In FIG. 9, for ease of description, the number of primary keypoints K1 to K4 is fewer than in reality. Further, in FIG. 3, only sub-keypoints S1 to S3 in the vicinity of the primary keypoint K4 are illustrated.

When the primary keypoints and the sub-keypoints are generated, the estimation learning unit 37 generates training data for the estimation model 26 (S302). The training data includes training images rendered on the basis of the three-dimensional shape model and ground truth data indicating positions of each of the primary keypoints and sub-keypoints in the training images.

FIG. 10 is a flow diagram illustrating an example of the processing of generating the training data. FIG. 10 is a diagram illustrating the processing of S302 in more detail. First, the estimation learning unit 37 acquires data on the three-dimensional shape model of the object (S321). Then, the estimation learning unit 37 acquires a plurality of viewpoints for rendering (S322). More precisely, the estimation learning unit 37 acquires a plurality of camera viewpoints for rendering and capturing directions corresponding to the camera viewpoints. The plurality of camera viewpoints may be provided at positions with a certain distance from the origin of the three-dimensional shape model, and the capturing directions are directions from the camera viewpoints toward the origin of the three-dimensional shape model.

Moreover, in a case where the axis of symmetry is set as symmetry, the estimation learning unit 37 adds camera viewpoints in a direction of 180-degree rotation along the axis of symmetry. Through the addition of camera viewpoints in the rotation direction, intensive learning can be performed for angles at which errors occur easily, and a decrease in the accuracy of pose estimation caused by similar appearances due to symmetry can be reduced.

When the viewpoints are acquired, the estimation learning unit 37 renders images of the object for each of the viewpoints on the basis of the three-dimensional shape model (S325). The images may be rendered by a well-known method.

When the images are rendered, the estimation learning unit 37 transforms the rendered images by using a modulation filter and acquires the transformed images as training images (S326). The modulation filter intentionally changes brightness of each pixel of the rendered images to prevent a decrease in inference performance due to a difference between the captured image color and the actual color. The estimation learning unit 37 calculates a product of values of each pixel element of the rendered images and values of the corresponding pixels of the modulation filter, thereby transforming the rendered images. The modulation filter is one of data augmentation techniques for rendered training images, and the estimation learning unit 37 may apply other data augmentation techniques in S326. For example, the estimation learning unit 37 may perform, on the rendered images, general data augmentation such as applying fluctuations to at least some of the brightness, saturation, and hue of the images or cropping parts of the images and resizing the resultant to the same sizes as the originals, in combination with the transformation by the modulation filter.

The modulation filter is generated by the following method. First, the estimation learning unit 37 sets the values of each pixel of the original image with a lower resolution (for example, 8 × 8) than the resolution of the rendered image (for example, 96 × 96) to random values between 0.5 and 1.5. Note that, the values of each pixel are set such that the average value of the pixels is 1.0.

Next, the estimation learning unit 37 enlarges the size of the original image to the size with the resolution of the rendered image. The estimation learning unit 37 may determine the values of each pixel by linear interpolation in the enlargement. When the size is enlarged, the estimation learning unit 37 further applies a 3 × 3 Gaussian filter a plurality of times (for example, three times) to make spatial changes of the values of each pixel more gradual.

With this, the estimation model 26 can be prevented from overlearning brightness due to variations occurring in the brightness of the images included in the training data, and a decrease in accuracy when the estimation model 26 processes real images can be reduced. Note that, the estimation learning unit 37 may transform only some of the rendered images and use some of the rendered images as training images as they are. Only some of the rendered images are transformed, thereby enabling obtainment of a higher effect. Alternatively, instead of transforming the images themselves, a texture map of the three-dimensional shape model may be transformed.

When the processing of S326 is performed, the estimation learning unit 37 adds the captured images of the object with the viewpoints to the training images (S327). These captured images may be the captured images used to generate the three-dimensional shape model. The camera viewpoints of the captured images may be the camera viewpoints acquired in generating the three-dimensional shape model.

When the training images are prepared, the estimation learning unit 37 generates, for each of the training images, ground truth data indicating the positions of the keypoints in the training image, on the basis of the three-dimensional positions of the primary keypoints and sub-keypoints and the viewpoint of the training image (S328). The estimation learning unit 37 generates ground truth data for each of the primary keypoints and sub-keypoints for each training image.

FIG. 11 is a diagram schematically illustrating an example of the ground truth data. The ground truth data is information indicating the two-dimensional positions of the keypoints of the object in training images and may be a position image in which each point indicates the positional relation (for example, direction) between that point and a keypoint.

The position image may be generated for each type of keypoint. The position image indicates the relative direction at each point between that point and the keypoint. In the position image illustrated in FIG. 11, patterns corresponding to the values of each point are illustrated, and the values of each point indicate the directions between the coordinates of those points and the coordinates of the keypoint. FIG. 11 is merely a schematic diagram, and the actual values of each point change continuously. Although not explicitly illustrated in FIG. 11, the position image is a Vector Field image indicating the relative direction of the keypoint at each point by using that point as a reference.

Through the processing illustrated in FIG. 10, the training data that includes the training images and the ground truth data is generated.

When the training data is generated, the estimation learning unit 37 trains the estimation model 26 for primary keypoints and sub-keypoints with the training data (S303).

In the training of the estimation model 26, first, the estimation learning unit 37 trains a neural network configured to output primary keypoints in the estimation model 26, with the training data for primary keypoints. The neural network may be as described in the paper "PVNet."

Next, a network for sub-keypoints connected to several of front layers among plurality of layers included in the trained neural network is added. Parameters for the front layers are fixed, and the neural network is trained with the training data for sub-keypoints. The parameters learned with the primary keypoints are used in the training for sub-keypoints in this way, thereby enabling a reduction in the period of time required for learning.

When the estimation model 26 is trained, the replacement candidate determination unit 36 selects one of the unselected initial primary keypoints as a target keypoint, and selects N sub-keypoints in the vicinity of the selected primary keypoint as replacement candidates (S304). Note that, the replacement candidate determination unit 36 may select sub-keypoints with the 1st to Nth smallest distances from the target keypoint as sub-keypoints in the vicinity.

The reliability determination unit 38 acquires information that is output from the estimation model 26 when a captured image for reliability calculation is input to that estimation model 26 and that indicates the positions of the primary keypoint and replacement candidates (S305). Note that, the captured image may be input to the estimation model 26 in this step or before S304. The captured image for reliability calculation may include some of the images utilized in generating the three-dimensional shape model.

The reliability determination unit 38 calculates the reliability of the positions of the target keypoint and replacement candidates on the basis of the acquired information (S306). In a case where the acquired information is a Vector Field image for each of the primary keypoint and replacement candidates, the reliability determination unit 38 may calculate the reliability of each of the target keypoint and replacement candidates by the following method, for example.

The reliability determination unit 38 selects a plurality of groups each including two points, from the Vector Field image output by the estimation model 26. For each of these groups, the reliability determination unit 38 calculates, on the basis of the directions of the keypoint indicated by each point included in the group, the candidate positions of the keypoint. The candidate positions each correspond to an intersection point of a straight line extending from a certain point in the direction indicated by that point and a straight line extending from the other point in the direction indicated by that point. When the reliability for each of the groups is calculated, the reliability determination unit 38 calculates, as reliability, a value indicating the variation of the candidate positions. The reliability determination unit 38 may take an average value of distances from the center of gravity of the candidate positions as the value of reliability, or may calculate a standard deviation in any direction of the candidate positions as the value of reliability, for example.

In the case where the reliability is calculated by the method described above, a smaller reliability value (higher reliability) indicates that the position of the keypoint is estimated more accurately. As a matter of course, the reliability may be an average value of reliability elements calculated for each of a plurality of captured images. The plurality of captured images may be different from each other in capturing direction.

The reliability may be obtained by other methods. For example, the reliability determination unit 38 may determine the reliability on the basis of the pose of the object estimated by the pose determination unit 28 and the ground truth pose thereof. More specifically, the reliability determination unit 38 selects one of the target keypoint and replacement candidates and estimates a pose of the object by the pose determination unit 28 from the selected keypoint and the unselected primary keypoints. The reliability determination unit 38 estimates the pose by the method described above for each of the target keypoint and replacement candidates. For each of the target keypoint and replacement candidates, the reliability determination unit 38 re-projects the positions of the target keypoint and replacement candidates in the captured image on the basis of the estimated pose and the three-dimensional positions of the unselected keypoints among the target keypoint and the replacement candidates, and stores the re-projected positions in the storage unit 12. Then, for each of the target keypoint and replacement candidates, the reliability determination unit 38 calculates, as reliability, an average distance between the position estimated by the output of the estimation model 26 and the re-projected position.

For example, the reliability determination unit 38 may calculate the reliability on the basis of the ground truth positions of the keypoints in the image obtained from the ground truth pose of the captured image. When the captured image is the image used in generating the three-dimensional shape model, the pose obtained by SLAM technology or the like can be used as a ground truth. In this case, the reliability determination unit 38 calculates the reliability on the basis of a difference between the position of the keypoint obtained by the output of the estimation model 26 and the ground truth position of the keypoint.

The replacement unit 39 determines, among the target keypoint and the replacement candidates, one with the highest reliability as a new primary keypoint (S307). That is, the replacement unit 39 replaces the target keypoint with, among the replacement candidates, one with the highest reliability in a case where any of the replacement candidates has higher reliability than the target keypoint.

Then, in a case where there is an unselected initial primary keypoint (Y in S308), the processing of S304 and thereafter is repeated. On the other hand, in a case where there is no unselected initial primary keypoint (N in S308), the processing of FIG. 8 ends.

When the processing of FIG. 8 ends, the replacement unit 39 may remove parts of the neural network included in the estimation model 26 that are utilized only for estimating initial primary keypoints or sub-keypoints that are not included in a final set of primary keypoints. That is, regarding the estimation model 26, the replacement unit 39 may leave only the neural network related to primary keypoints used for pose estimation and remove neural networks other than that. With this, an increase in the amount of calculation of the estimation model 26 during inference can be reduced.

For example, in a case where the primary keypoints are determined only by methods such as the Farthest Point algorithm, cases may arise where the determined locations are not suitable for pose estimation. In a case where a three-dimensional shape model is generated from real images, while shapes of tips tend to be inaccurate, end portions tend to be selected as keypoints by the Farthest Point algorithm (see K4 of FIG. 9). This leads to a concern that the keypoints are estimated by the estimation model 26 trained with rendered images reflecting inaccurate end portions, resulting in a decrease in the accuracy of keypoint estimation. Further, even with a perfect three-dimensional shape model, in a case where a depression is selected as a keypoint, the keypoint is easily hidden by other parts of the object, and hence, it is difficult to accurately estimate the position of the keypoint. In the present embodiment, replacement with keypoints whose positions can be estimated more accurately is made as needed, thereby enabling an improvement in the accuracy of pose estimation.

Moreover, replacement with sub-keypoints in the vicinity of initial primary keypoints is made, thereby enabling a reduction in possibility that the primary keypoints are close to each other. This enables a more reliable improvement in the accuracy of pose estimation while reducing the amount of calculation through the replacement of the primary keypoints.

Note that, the present invention is not limited to the embodiment described above.

For example, although there is a possibility of a decrease in the accuracy of pose estimation, sub-keypoints that are not in the vicinity of primary keypoints may be used as replacement candidates. Further, reliability of each of a set of a plurality of target keypoints and a set of a plurality of sub-keypoints that serve as replacement candidates may be calculated, and replacement may be made set by set on the basis of the reliability.

In a case where the output of the estimation model 26 is a position image such as a heat map, the reliability determination unit 38 may determine, as reliability, the number of peaks in the position image output by the estimation model 26.

Further, the specific character strings and numerical values described above, as well as the specific character strings and numerical values in the figures, are examples. The present invention is not limited to these character strings and numerical values, and the character strings and the numerical values may be modified as needed.

## Claims

1. An information processing apparatus comprising:
set determination means for determining a set including a plurality of keypoints for recognizing a pose of an object, on a basis of a three-dimensional model of the object;
candidate determination means for determining one or a plurality of candidate keypoints that are candidates to replace at least some of the plurality of keypoints included in the set;
reliability determination means for determining reliability of each of the keypoints included in the set and the candidate keypoints from information that is output when a captured image is input to a machine learning model trained and that indicates positions of the keypoints included in the set and the candidate keypoints, the machine learning model being configured to receive the captured image as an input and output information indicating the positions of the keypoints included in the set and information indicating the positions of the candidate keypoints; and
replacement means for replacing the at least some of the keypoints included in the set with at least some of the candidate keypoints on a basis of the reliability determined.

2. The information processing apparatus according to claim 1,
wherein the machine learning model to which the captured image has been input outputs a plurality of images each indicating the positions of the keypoints included in the set and the candidate keypoints.

3. The information processing apparatus according to claim 2, wherein, in each of the plurality of images output by the machine learning model to which the captured image has been input, each point indicates a positional relation with any of the keypoints included in the set and the candidate keypoints, and
the reliability determination means determines, regarding any of the plurality of images output, on a basis of a variation of a plurality of position candidates that are candidates for a position of any of a plurality of keypoints and candidate keypoints corresponding to the any of the images and that are obtained from different points included in the any of the images, reliability of the any of the plurality of keypoints and the candidate keypoints.

4. The information processing apparatus according to claim 1 or 2, further comprising:
pose determination means for determining the pose of the object from information that has been output when the captured image is input to the machine learning model and that indicates positions of some of the keypoints included in the set and any of the candidate keypoints,
wherein the reliability determination means determines the reliability of the keypoints and the candidate keypoints on a basis of positions of the keypoints and the candidate keypoints re-projected according to the pose determined and the positions of the keypoints and the candidate keypoints indicated by the information output.

5. The information processing apparatus according to claim 1 or 2, further comprising:
pose determination means for determining the pose of the object from information that has been output when the captured image is input to the machine learning model and that indicates positions of some of the keypoints included in the set and any of the candidate keypoints,
wherein the reliability determination means determines estimated reliability of each of the keypoints included in the set and the candidate keypoints on a basis of the pose determined and ground truth data on the pose of the object in the captured image.

6. An information processing method comprising:
a step of determining a set including a plurality of keypoints for recognizing a pose of an object, on a basis of a three-dimensional model of the object;
a step of determining one or a plurality of candidate keypoints that are candidates to replace at least some of the plurality of keypoints included in the set;
a step of determining reliability of each of the keypoints included in the set and the candidate keypoints from information that is output when a captured image is input to a machine learning model trained and that indicates positions of the keypoints included in the set and the candidate keypoints, the machine learning model being configured to receive the captured image as an input and output information indicating the positions of the keypoints included in the set and information indicating the positions of the candidate keypoints; and
a step of replacing the at least some of the keypoints included in the set with at least some of the candidate keypoints on a basis of the reliability determined.

7. A program for causing a computer to execute processing of:
determining a set including a plurality of keypoints for recognizing a pose of an object, on a basis of a three-dimensional model of the object;
determining one or a plurality of candidate keypoints that are candidates to replace at least some of the plurality of keypoints included in the set;
determining reliability of each of the keypoints included in the set and the candidate keypoints from information that is output when a captured image is input to a machine learning model trained and that indicates positions of the keypoints included in the set and the candidate keypoints, the machine learning model being configured to receive the captured image as an input and output information indicating the positions of the keypoints included in the set and information indicating the positions of the candidate keypoints; and
replacing the at least some of the keypoints included in the set with at least some of the candidate keypoints on a basis of the reliability determined.
